# EUROPÄISCHE PATENTSCHRIFT

(11) **EP 0 651 714 B1**
(45) Veröffentlichungstag und Bekanntmachung des Hinweises auf die Patenterteilung: **13.11.1996**
(21) Anmeldenummer: 93917712.7
(22) Anmeldetag: 30.07.1993
(51) Int. Cl.: B64D 7/08, F41F 3/052

(54) **VERRIEGELUNGSBAUGRUPPE BEI EINEM STARTGERÄT FÜR FLUGKÖRPER**
LOCKING UNIT FOR A MISSILE LAUNCHING DEVICE
BLOC DE VERROUILLAGE POUR UN LANCEUR DE MISSILE

(30) Priorität: 03.08.1992 DE 9210369 U
(43) Veröffentlichungstag der Anmeldung: 10.05.1995
(73) Patentinhaber: Bodenseewerk Gerätetechnik GmbH, 88662 Überlingen (DE)
(72) Erfinder: GIESENBERG, Peter, D-88682 Salem (DE); STADLER, Rolf, D-88662 Überlingen (DE); Lang, Wilfried, D-56077 Koblenz (DE)
(74) Vertreter: Wolgast, Rudolf, Dipl.-Chem. Dr.
(86) Internationale Anmeldenummer: EP9302044
(87) Internationale Veröffentlichungsnummer: WO9403364

(56) Entgegenhaltungen:
- EP-A- 0 340 400
- FR-A- 1 258 098
- FR-A- 2 316 178
- GB-A- 2 133 865
- US-A- 2 422 660
- US-A- 2 938 431
- US-A- 3 040 629

## Beschreibung

Die Erfindung betrifft eine Verriegelungsbaugruppe zur Verriegelung eines an einem Flugkörper vorgesehenen Schuhs bei einem Startgerät, enthaltend eine schwenkbar gelagerte Sperrklinke, die mit zwei Sperrnasen versehen ist, welche die Aufgabe haben, in einer Sperrstellung den an dem Flugkörper vorgesehenen Schuh zu übergreifen, eine Feder welche die Sperrklinke in Richtung auf die Sperrstellung vorbelastet, eine an der Sperrklinke angeordnete Riegelnase und eine Sicherheitsklinke, an welche sich die Riegelnase in der Sperrstellung anlegt, wenn Beschleunigungskräfte auf die Sperrklinke wirken, so daß die Sperrklinke in der Sperrstellung gehalten ist, und einen Sicherungsstift, der im Sperrzustand der Sperrklinke durch ein Gehäuse der Verriegelungsbaugruppe hindurchsteckbar ist und an welchem die Sperrklinke zur Anlage kommt

Flugkörper, insbesondere zielverfolgende Raketen, sind in Startgeräten gehaltert, die z.B. an einem Flugzeug angebracht sind. In diesen Startgeräten sind sie durch Sperrklinken gegen unbeabsichtigtes Herausrutschen gesichert. Diese Sperrklinken greifen über einen Schuh, der an dem Flugkörper vorgesehen ist. Die Sperrklinke stützt sich mit einer Riegelnase an einer Sicherheitsklinke ab. Beim Abschuß des Flugkörpers wird die Sicherheitsklinke durch eine elektro-mechanische Einrichtung nach unten weggedrückt. Die Sperrklinke wird durch den vom Flugkörper erzeugten Schub weggedrückt. Solche Verriegelungsbaugruppen an Startgeräten sind in praktischem Einsatz. Es hat sich nun gezeigt, daß gelegentlich Flugkörper aus dem Startgerät herausrutschen. Das kann zu sehr gefährlichen Situationen führen. Die GB-A-2 133 865 zeigt eine Verriegelungsbaugruppe bei einem Startgerät für Flugkörper mit einer schwenkbar gelagerten Sperrklinke, die mit zwei Sperrnasen über einen am Flugkörper vorgesehenen Schuh greift. Die Sperrklinke ist durch eine Feder in Richtung auf eine Sperrstellung vorbelastet, in welcher der Schuh des Flugkörpers durch die Sperrnasen gehalten ist. An der Sperrklinke ist eine Riegelnase vorgesehen. In der Sperrstellung liegt an der Riegelnase eine Sperrvorrichtung an. Bei der GB-A-2 133 865 ist die Sperrvorrichtung ein Kniehebelmechanismus, der durch einen Rechner nach einer vorgegebenen Zeit auslösbar ist und dann die Riegelnase freigibt. Die Sperrklinke kann dann unter dem Einfluß des Schubs eines Feststoff-Raketenmotors des Flugkörpers ausweichen und gibt den Schuh frei. Dadurch wird je nach Flughöhe und Geschwindigkeit des Trägerflugzeigs bei Abschuß des Flugkörpers ein Teil des Treibstoffs verbrannt, um zu verhindern, daß der Flugkörper bei bestimmten Bedingungen auf eine übermäßige Geschwindigkeit beschleunigt wird.

Die FR-A-1 258 098 zeigt ein Startgerät, bei welchem eine Entriegelung einer Sperrklinke für einen Flugkörper durch ein Entriegelungsglied erfolgt, das in den Düsenstrahl des Flugkörpers hineinragt.

Der Erfindung liegt die Aufgabe zugrunde, das Risiko eines unbeabsichtigten Herausrutschens des Flugkörpers aus dem Startgerät zu vermindern.

Die Erfindung beruht auf einer Untersuchung der Ursachen einer solchen Fehlfunktion der Sperrklinke.

Die Belademannschaft führt nach dem Einsetzen des Flugkörpers und der Sicherung des Flugkörpers durch die Sperrklinke den Sicherungsstift ein. Sie geht dabei von der Annahme aus, daß dann, wenn der Sicherungsstift ohne Widerstand eingeschoben werden kann, die Sperrklinke ordnungsgemäß eingerastet ist und den Schuh des Flugkörpers sicher umgreift. Tatsächlich gibt es aber bei den Verriegelungsbaugruppen nach dem Stand der Technik eine Stellung der Sperrklinke, bei welcher sich der Sicherungsstift ebenfalls problemlos einstecken läßt, obwohl die Sperrklinke den Schuh des Flugkörpers nicht ordnungsgemäß umgreift.

Bei vorschriftsmäßigem Anheben der Sperrklinke bei der Beladung liegt die Riegelnase oberhalb der Sicherheitsklinke. Wenn dann der Flugkörper mit zu großem Schwung in das Startgerät eingeführt wird, dann kann es vorkommen, daß die vordere Sperrnase der Sperrklinke von dem Flugkörper angehoben wird und auf dem Schuh des Flugkörpers aufsitzt.

Bei dieser fehlerhaften Beladung kann es zu einer Verklemmung der Sperrklinke kommen. Die hintere Sperrnase bleibt in der angehobenen Position. Bei einer solchen Lage der Sperrklinke kann der Flugkörper nach vorn oder nach hinten aus dem Startgerät herausrutschen. Trotz dieser falschen Beladung ist der Sicherheitsstift einschiebbar und täuscht eine korrekte Beladung vor.

Es kann auch geschehen, daß der Flugkörper bei der Beladung nicht weit genug vorgeschoben wird, so daß der Schuh des Flugkörpers nicht an der vorderen Sperrnase der Sperrklinke zur Anlage kommt. Die hintere Sperrnase der Sperrklinke sitzt dann nach dem Absenken der Sperrklinke auf dem Schuh des Flugkörpers auf. Auch in einem solchen Fall kann bei den bekannten Sperrklinken der Sicherheitsstift problemlos eingesteckt werden.

Ausgehend von dieser Erkenntnis wird die vorstehend angegebene Aufgabe erfindungsgemäß dadurch gelöst, daß an der Sperrklinke eine Kulisse vorgesehen ist, welche in die Bahn des Sicherungsstiftes hineinragt, wenn die Sperrklinke nicht in ihrer korrekten Sperrstellung ist.

Ein Ausführungsbeispiel der Erfindung ist nachstehend unter Bezugnahme auf die zugehörigen Zeichnungen näher erläutert.
- Fig.1: zeigt eine Verriegelungsbaugruppe in einem Startgerät für Flugkörper in normaler Verriegelungsstellung.
- Fig.2: zeigt die Verriegelungsbaugruppe in einer Fehlstellung.
- Fig.3: ist eine perspektivische Darstellung der Sperrklinke mit Kulisse.
- Fig.4: ist eine perspektivische Darstellung einer Sperrklinke mit einer abgewandelten Form der Kulisse.
- Fig.5: bis 9 zeigen in verschiedenen Positionen eine Sperrklinke mit einer weiteren Ausführung der Kulisse.

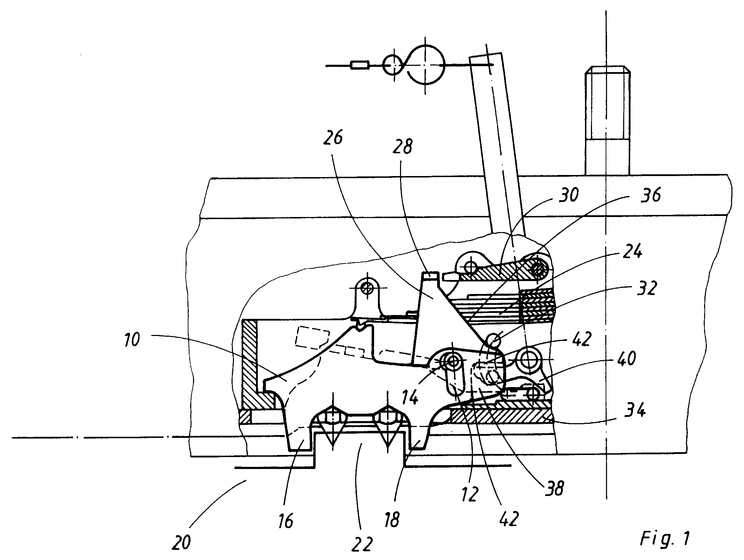

Eine Verriegelungsbaugruppe bei einem Startgerät für Flugkörper enthält eine Sperrklinke 10. Die Sperrklinke 10 ist ein komplexes Gußteil. Die Sperrklinke 10 ist mit einem Langloch 12 auf einem gehäusefesten Lagerzapfen 14 schwenkbar gelagert. Die Sperrklinke 10 ist mit zwei Sperrnasen 16 und 18 zum Übergreifen eines an dem Flugkörper 20 vorgesehenen Schuhs 22 versehen. Die Sperrklinke ist durch eine Feder 24 in Richtung auf eine Verriegelungsstellung vorbelastet, in welcher der Schuh 22 des Flugkörpers 20 verriegelt ist. Der Lagerzapfen 14 liegt dabei an einem ersten, oberen Ende des Langloches 12 an. Die Sperrklinke 10 weist weiterhin eine Riegelnase 26 auf. An der Riegelnase 26 ist ein Querstück 28 angeformt. Dieses Querstück 28 liegt an einer Sicherungsklinke 30. Die Sicherungsklinke 30 verhindert eine Verschwenkung der Sperrklinke 10, wenn etwa durch Trägheitskräfte der Schuh 22 des Flugkörpers 20 nach links in Fig.1 drückt und ggf. die Kraft der Feder 24 überwinden würde. Vor dem Abschuß des Flugkörpers 20 wird diese Sicherheitsklinke 30 nach unten weggeschwenkt.

Die Verriegelungsbaugruppe enthält weiterhin einen Sicherungsstift 32, der im Verriegelungszustand der Sperrklinke 10 durch ein Gehäuse 34 der Verriegelungsbaugruppe hindurchsteckbar ist und an welchem die Sperrklinke 10 mit einer Fläche 36 zur Anlage kommt. An der Sperrklinke 10 ist eine Kulisse 38 vorgesehen, welche in die Bahn des Sicherungsstiftes 32 hineinragt, wenn die Sperrklinke 10 nicht in ihrer korrekten Sperrstellung ist.

Mit 40 ist ein Stellhebel bezeichnet, durch welchen über einen Beladeschlüssel die Sperrklinke 10 entgegen dem Uhrzeigersinn zum Laden des Flugkörpers 20 in die Startvorrichtung aus einer Riegelstellung in eine Beladestellung verschwenkt werden kann. Der Stellhebel 40 greift zu diesem Zweck an einer Nase 42 der Sperrklinke 10 an.

Die beschriebene Anordnung arbeitet wie folgt:

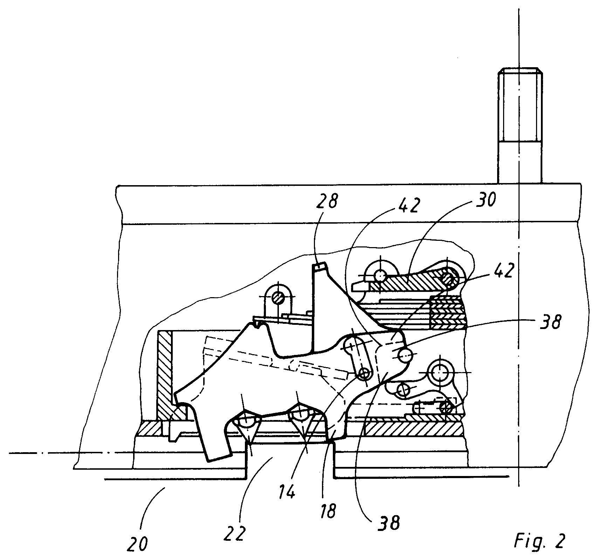

Zum Laden des Flugkörpers 20 in die Startvorrichtung wird die Sperrklinke 10 entgegen dem Uhrzeigersinn in Fig.1 etwa in die in Fig.2 dargestellte Beladestellung verschwenkt. In dieser Beladestellung liegt der Lagerzapfen 14 an dem zweiten, unteren Ende des Langloches 12 an. Der Flugkörper 20 wird dann von rechts in Fig.1 und 2 in die Startvorrichtung eingeschoben. Der Schuh 22 kommt an der vorderen Sperrnase 16 zur Anlage und schwenkt, unterstützt von der Feder 24, die Sperrklinke 10 im Uhrzeigersinn in die in Fig.1 dargestellte Riegelstellung. Der Stellhebel 40 wird dann in die Ausgangslage zurückgeschwenkt. Das Querstück 28 liegt dann vor der Sicherheitsklinke 30, die eine weitere Verschwenkung der Sperrklinke 10 verhindert. Es wird dann der Sicherheitsstift 32 eingeschoben. Das problemlose Einschieben dieses Sicherheitsstiftes 32 zeigt der Belademannschaft an, daß die Sperrklinke 10 richtig eingerastet ist.

Zum Abschuß des Flugkörpers 20 wird die Sicherheitsklinke 30 nach unten weggeschwenkt. Die Sperrklinke 10 ist dann nur durch die Feder 24 in ihrer Sperrstellung (Fig.1) gehalten. Beim Abschuß des Flugkörpers 20 wird durch den Schub des Flugkörpers 20 die Sperrnase 16 gegen die Wirkung der Feder 24 weggedrückt und die Sperrklinke 10 im Uhrzeigersinn verschwenkt. Dadurch wird der Flugkörper 20 freigegeben.

Bei einer Verriegelungsbaugruppe nach dem Stand der Technik ist die Kulisse 38 nicht vorhanden. Die Kontur der Sperrklinke 10 verläuft dort längs der gestrichelt in Fig.1 und 2 eingezeichneten Linie 42.

Es kann nun aber sein, daß die Sperrklinke 10 und der Flugkörper 20 mit dem Schuh 22 in der in Fig.2 dargestellten Stellung verbleiben, weil der Flugkörper beim Beladen nicht, wie für eine richtige Beladung notwendig, so weit nach vorn geschoben wurde, daß der Schuh 22 an der Sperrnase anliegt. Die Sperrnase 18 sitzt auf dem Schuh 22. Der Querbolzen 14 sitzt am unteren Ende des Langloches 12. Das Querstück 28 sitzt nicht vor der Sicherheitsklinke 30. Trotz fehlerhafter Beladung kann bei der Verriegelungsbaugruppe nach dem Stand der Technik auch in dieser Stellung der Sicherheitsstift 32 eingeschoben werden. Der Sicherheitsstift 32 liegt aber dann nicht, wie erforderlich, an der Fläche 36 an sondern an der Nase 42 der Sperrklinke 10. Es ist dann möglich, daß der Flugkörper 20 z.B. unter dem Einfluß von Trägheitskräften beim Start des Flugzeugs nach hinten aus dem Startgerät herausrutscht.

Falsche Beladungen sind vor allem auch dadurch möglich, daß der Flugkörper mit zu großem Schwung in die Verriegelungsbaugruppe eingeführt wird. Es ist dann möglich, daß die vordere Nase 16 der Sperrklinke 10 von dem Schuh 22 angehoben wird und auf dem Schuh 22 aufliegt. Da gleichzeitig auch die hintere Nase 18 der Sperrklinke 10 mit dem Beladeschlüssel angehoben wird, kann sich die Sperrklinke in dieser Stellung verklemmen. Auch in dieser Fehlstellung der Sperrklinke 10 kann bei einer Verriegelungsbaugruppe nach dem Stand der Technik der Sicherheitsstift eingeführt werden, obwohl die Beladesicherheit nicht gegeben ist.

Der Sicherungsstift läßt sich somit bei der Verriegelungsbaugruppe nach dem Stand der Technik in beiden Fällen einschieben. Das täuscht der Belademannschaft eine einwandfreie Halterung des Schuhs 22 in der Sperrklinke 10 vor.

Bei der beschriebenen Verriegelungsbaugruppe ist dagegen die Kulisse 38 vorgesehen. Diese Kulisse 38 verhindert in der Fehlstellung von Fig.2 ein Einschieben des Sicherungsstiftes 32. Die Belademannschaft erkennt daraus das Vorliegen einer Fehlstellung.

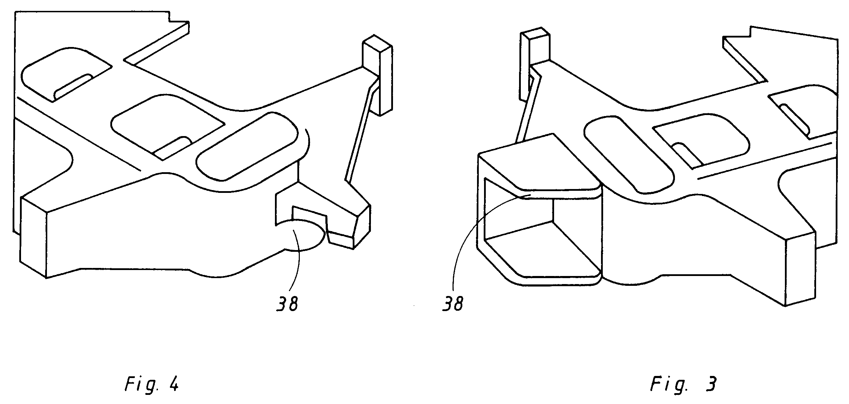

Bei der Ausführung von Fig.3 ist anschließend an die Nase 42 auf außerhalb der Bahn des Stellhebels 40 eine Kulisse 38 in Form eines flachen Ansatzes vorgesehen.

Wie aus Fig.4 ersichtlich ist, ist die Kulisse 38 von einem an der Sperrklinke 10 angebrachten U-Profilteil gebildet. Ein solches U-Profilteil behindert nicht die Funktion des Stellhebels 40. Es kann nachträglich durch Material-Verbindungsmittel mit vorhandenen Sperrklinken 10 verbunden werden, beispielsweise angeschweißt, angelötet oder angeklebt werden, und gestattet daher eine einfache Nachrüstung vorhandener Verriegelungsbaugruppen.

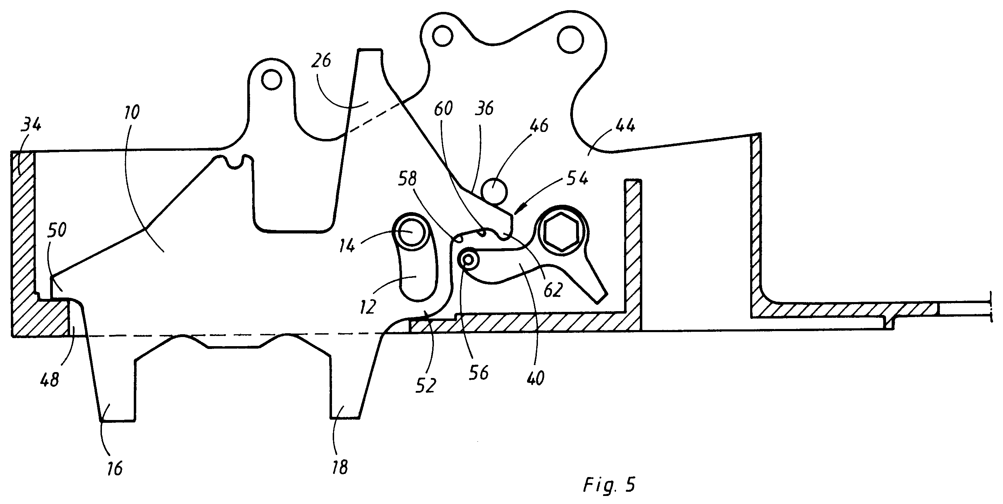

Die Figuren 5 bis 9 beschreiben eine weitere Ausführungsform der Verriegelungsbaugruppe. Der Grundaufbau ist der gleiche wie bei den Ausführungsformen nach Fig.1 bis 3. Entsprechende Teile sind mit den gleichen Bezugszeichen versehen wie dort.

In den Seitenwänden 44 des Gehäuses 34 sind fluchtende Bohrungen 46 für den Sicherungsstift 32 angebracht. Die Sperrklinke 10 sitzt über einem Durchbruch 48 im Boden des Gehäuses 34. Ein Rand 50 der Sperrklinke 10 sitzt dabei auf einer Seite auf dem Rand des Durchbruchs 48 auf. Auf der gegenüberliegenden Seite ist in der in Fig.5 dargestellten Position ein Teil 52 ebenfalls auf dem Rand des Durchbruches 48 abgestützt. Sperrnasen 16 und 18 ragen durch den Durchbruch 48 hindurch. Ein in dem Gehäuse 34 sitzender Querbolzen 14 erstreckt sich durch ein Langloch 12 der Sperrklinke. In der in Fig.5 dargestellten Position befindet sich der Querbolzen 14 am oberen Ende des Langlochs 12. An der Sperrklinke 10 ist weiterhin eine Riegelnase 26 angeformt, die wie bei der Ausführung von Fig.1 an einer (nicht dargestellten) Sicherungsklinke 30 anliegt.

Bei der Ausführung nach Fig.5 bis 9 ist an der Sperrklinke 10 eine Nase 54 angeformt. Diese Nase 52 erfüllt mehrere Funktionen: An der Nase 36 greift der Stellhebel 40 über eine Rolle 56 an. Der Stellhebel 40 verschwenkt bei Betätigung eines Beladeschlüssels die Sperrklinke 10 entgegen dem Uhrzeigersinn in eine Beladestellung. Weiterhin ist die Nase 52 aber so geformt und angeordnet, daß sie in den Bereich der Bohrungen 46 hineinragt und ein Einstecken des Sicherungsstiftes 32 verhindert, wenn sich die Sperrklinke nicht genau in der in Fig.5 dargestellten Riegelstellung befindet. Die Nase 52 bildet die Fläche 36, hinter welcher der Sicherungsstift 32 durch die Bohrungen 46 hindurchsteckbar ist.

Die Nase 52 bildet eine Nockenfläche 58, an welcher der Stellarm 40 bei Verschwenkung durch den Beladeschlüssel zur Anlage kommt. Die Nockenfläche 58 weist einen geraden Abschnitt 60 auf. An den geraden Abschnitt 60 schließt sich ein vorstehendes Ende 62 der Nase an. Bei der Verschwenkung des Stellhebels 40 im Uhrzeigersinn bewegt sich der Stellhebel 40 mit der Rolle 56 längs der Nockenfläche 58. Dabei wird die Sperrklinke 10 um die Auflage des Randes 50 entgegen dem Uhrzeigersinn von Fig.5 bis 9 verschwenkt. Der Querbolzen 14 bewegt sich dabei in dem Langloch 12. Die Schwenkbewegung sowohl des Stellhebels 40 als auch der Sperrklinke 10 wird dadurch begrenzt, daß die Rolle 56 an dem vorstehenden Ende 62 der Nase 54 zur Anlage kommt. Das ist die Beladestellung.

Die verschiedenen Stellungen sind in den Figuren 5 bis 9 dargestellt:

Fig.5 zeigt die Riegelstellung. Der Stellhebel 40 befindet sich in der 0°-Stellung und greift noch nicht an der Sperrklinke 10 an. In dieser Stellung, und nur in dieser Stellung, sind die Bohrungen 46 vollständig frei, so daß der Sicherungsstift 32 dort hindurchgesteckt werden kann. Die Fläche 36 liegt dann in der Seitenansicht von Fig.5 tangential zu dem Querschnitt der Bohrungen 46.

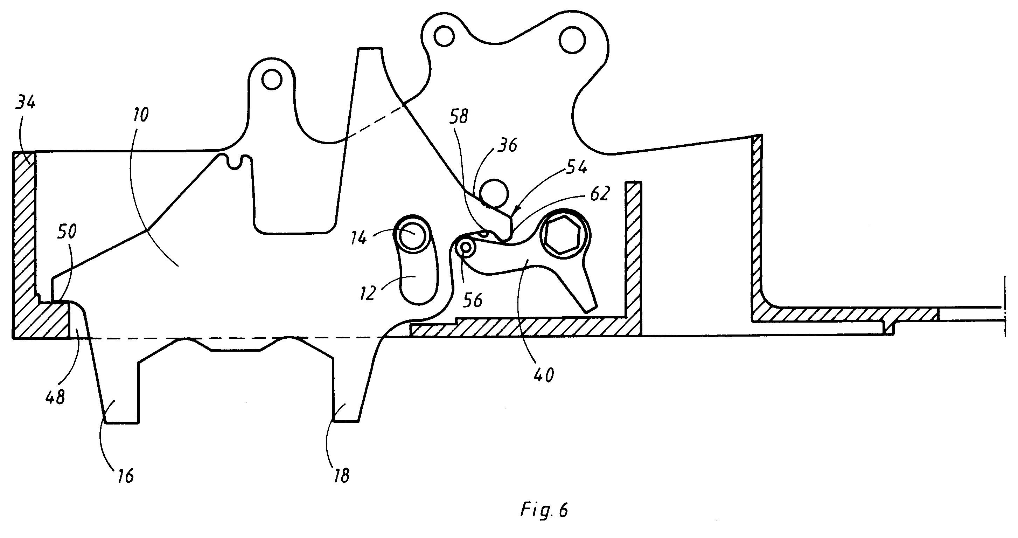

Fig.6 zeigt den Zustand nach Verschwenkung des Stellhebels 40 um einen Winkelvon 10° im Uhrzeigersinn. Dann kommt die Rolle 56 gerade an der Nockenfläche 58 zur Anlage. Die Rolle 56 liegt dann an dem in Fig.6 linken Ende des geraden Abschnitts 60 an. Das nach unten in Fig.6 gegen den Stellhebel 40 vorstehende Ende 62 der Nase 54 erstreckt sich gerade so weit, daß es in dieser Stellung gerade dicht oberhalb des Stellhebels 40 endet.

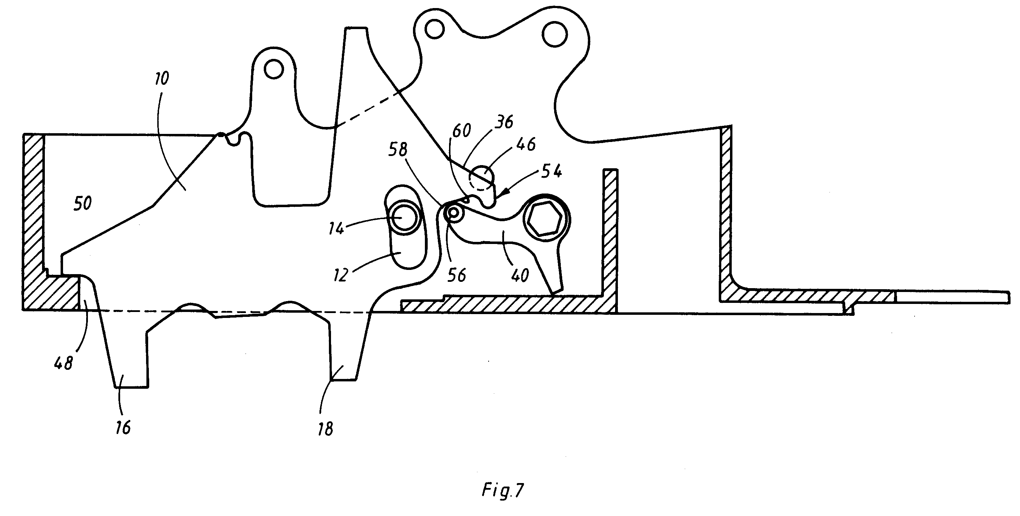

Bei weiterer Verschwenkung des Stellhebels 40 im Uhrzeigersinn von Fig.6 wird die Sperrklinke 10 um die Auflage des Randes entgegen dem Uhrzeigersinn in Fig.6 verschwenkt. Das ist in Fig.7 für einen Schwenkwinkel des Stellhebels 40 von 20° dargestellt. Der Querbolzen 14 gleitet dabei in dem Langloch 12. Der Querbolzen 14 entfernt sich dabei von dem oberen Ende des Langloches 12. Die Rolle 56 bewegt sich längs des geraden Abschnitts 60 der Nockenfläche 58 nach rechts in Fig.7. Dabei erstreckt sich die Nase 54 mit der Fläche 37 über die Bohrungen 46. Es ist jetzt nicht mehr möglich, den Sicherungsstift 32 durch die Bohrungen 46 hindurchzustecken.

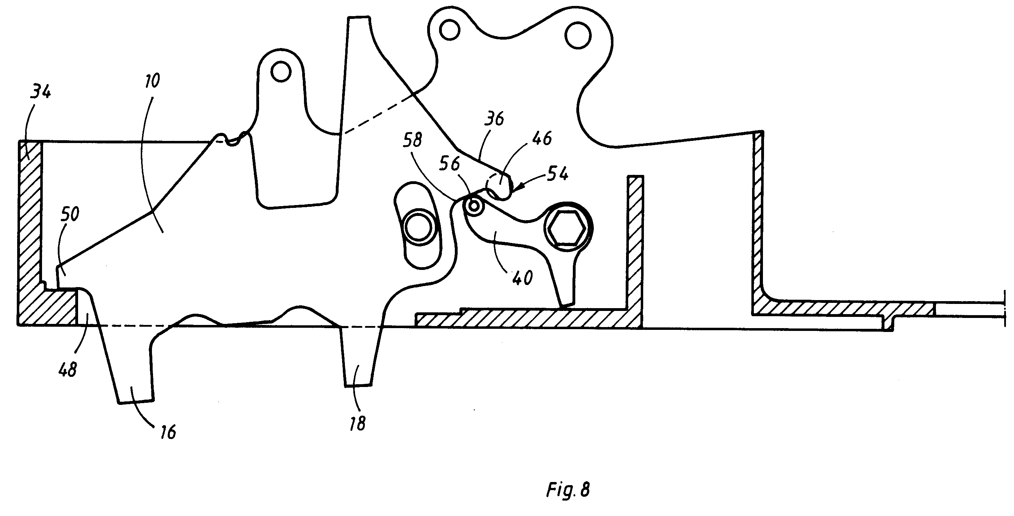

Fig.8 zeigt den Zustand nach einer Verschwenkung des Stellhebels 40 um 30°. Dabei sind die Bohrungen 46 praktisch vollständig von der Nase 54 abgedeckt. Die Rolle 56 hat sich weiter längs der Nockenfläche 58 nach rechts in Fig.8 bewegt.

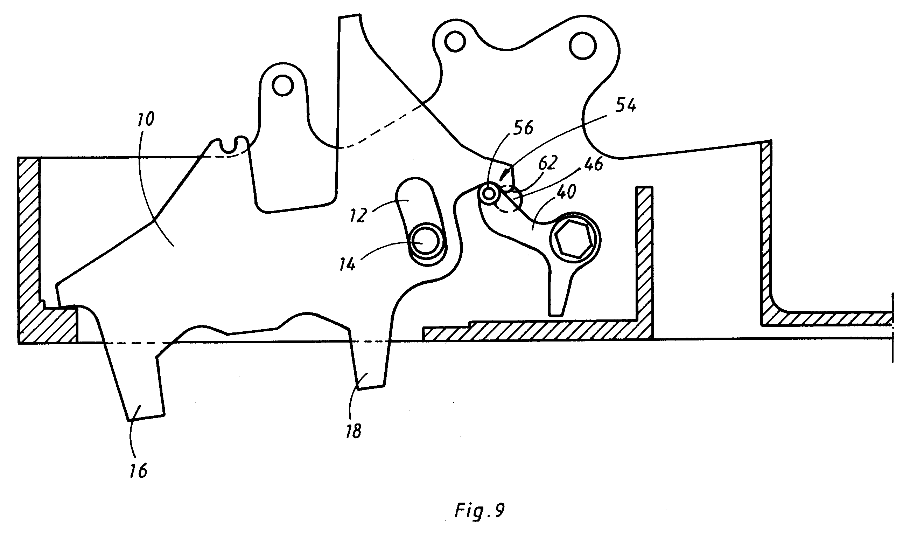

Fig.9 zeigt schließlich die Beladestellung bei einem Schwenkwinkel des Stellhebels 40 von 44°. Die Rolle 56 kommt dann an dem vorstehenden Ende 62 zur Anlage. Dadurch wirkt das vorstehende Ende 62 als Wegbegrenzung, welche den Weg der Rolle 56 begrenzt. Damit wird auch die Schwenkbewegung der Sperrklinke 10 entgegen dem Uhrzeigersinn in Fig.9 begrenzt. Der Querbolzen 14 ist dabei noch ein Stück von dem in Fig.9 unteren Ende des Langloches 12 entfernt. Die Begrenzung der Schwenkbewegung erfolgt also nicht durch den Querbolzen 14 und das Langloch 12.

Wie aus Fig.9 ersichtlich ist, ragt das Ende 62 der Nase noch etwas in den Querschnitt der Bohrungen 46 hinein. Auch in dieser Endstellung ist es nicht möglich, den Sicherungsbolzen 32 (Fig.1) einzuschieben.

## Patentansprüche

1. Verriegelungsbaugruppe zur Verriegelung eines an einem Flugkörper vorgesehenen Schuhs bei einem Startgerät, enthaltend
(a) eine schwenkbar gelagerte Sperrklinke (10), die mit zwei Sperrnasen (16,18) versehen ist, welche die Aufgabe haben, in einer Sperrstellung den an dem Flugkörper vorgesehenen Schuh zu übergreifen,
(b) eine Feder (24) welche die Sperrklinke (10) in Richtung auf die Sperrstellung vorbelastet,
(c) eine an der Sperrklinke (10) angeordnete Riegelnase (26) und eine Sicherheitsklinke (30), an welche sich die Riegelnase (26) in der Sperrstellung anlegt, wenn Beschleunigungskräfte auf die Sperrklinke (10) wirken, so daß die Sperrklinke (10) in der Sperrstellung gehalten ist, und
(d) einen Sicherungsstift (32), der im Sperrzustand der Sperrklinke (10) durch ein Gehäuse (34) der Verriegelungsbaugruppe hindurchsteckbar ist und an welchem die Sperrklinke (10) zur Anlage kommt,
**dadurch gekennzeichnet, daß**
(e) an der Sperrklinke (10) eine Kulisse (38) vorgesehen ist, welche in die Bahn des Sicherungsstiftes (32) hineinragt, wenn die Sperrklinke (10) nicht in ihrer korrekten Sperrstellung ist.

2. Verriegelungsbaugruppe nach Anspruch 1, **dadurch gekennzeichnet, daß**
(a) die Sperrklinke (10) in einem Gehäuse (34) angeordnet ist, das einen mit einem Durchbruch (48) versehenen Boden aufweist, und mit einem Randteil (50) auf dem Boden neben dem Durchbruch abgestützt ist,
(b) die Sperrnasen (16,18) durch den Durchbruch (48) des Bodens hindurchragen und
(c) die Sperrklinke (10) ein quer dort hindurchgehendes Langloch (12) aufweist, durch welches sich ein im Gehäuse (34) sitzender Querbolzen (14) erstreckt.

3. Verriegelungsbaugruppe nach Anspruch 1 oder 2, **dadurch gekennzeichnet, daß** die Kulisse (38) von einem gesonderten Bauteil gebildet ist, die durch Material-Verbindungsmittel mit der Sperrklinke (10) verbunden sind.

4. Verriegelungsbaugruppe nach Anspruch 3, **dadurch gekennzeichnet, daß** die Material-Verbindungsmittel von einer Schweißverbindung gebildet sind.

5. Verriegelungsbaugruppe nach Anspruch 3, **dadurch gekennzeichnet, daß** die Material-Verbindungsmittel von einer Lötverbindung gebildet sind.

6. Verriegelungsbaugruppe nach Anspruch 3, **dadurch gekennzeichnet, daß** die Material-Verbindungsmittel von einer Klebverbindung gebildet sind.

7. Verriegelungsbaugruppe nach einem der Ansprüche 1 bis 6, **dadurch gekennzeichnet, daß**
(a) die Sperrklinke (10) durch einen kraftschlüssig an einer Nockenfläche (58) der Sperrklinke (10) anliegenden Stellhebel (40) aus einer Riegelstellung in eine Beladestellung verschwenkbar ist, wobei das an der Nockenfläche (58) anliegende Ende (56) des Stellhebels (40) bei der Schwenkbewegung sich längs der Nockenfläche (58) bewegt und
(b) die Nockenfläche (58) der Sperrklinke (10) eine Wegbegrenzug bildet, durch welche die Bewegung des Stellhebels (40) längs der Nockenfläche (58) und damit die Verschwenkung der Sperrklinke (10) begrenzt wird.

8. Verriegelungsbaugruppe nach Anspruch 7, **dadurch gekennzeichnet, daß** die Kulisse von einer an der Sperrklinke vorgesehenen Nase (54) gebildet ist, welche
- auf einer ersten Seite eine Fläche (36) bildet, an welcher der Sicherungsstift (32) anliegt und
- auf einer der ersten Seite entgegengesetzten zweiten Seite die Nockenfläche (58) bildet, wobei
- die Nockenfläche (58) in ein die Wegbegrenzung bildendes, vorspringendes Ende (62) ausläuft.

9. Verriegelungsbaugruppe nach den Ansprüchen 2 und 8, **dadurch gekennzeichnet, daß** der Querbolzen (14) in der Beladestellung im Abstand vom bodenseitigen Ende des Langloches (12) angeordnet ist.

10. Verriegelungsbaugruppe nach einem der Ansprüche 3 bis 6, **dadurch gekennzeichnet, daß** die Kulisse (38) von einem an der Sperrklinke (10) angebrachten U-Profilteil gebildet ist.

## Claims

1. Locking assembly for locking a shoe, which is provided at a missile, in a launcher, comprising
(a) a pivotally mounted blocking latch (10), which is provided with two blocking lugs (16,18), which serve to extend over the shoe provided at the missile,
(b) a spring (24) which biases the blocking latch (10) towards its blocking position,
(c) a locking lug (26) provided at the blocking latch (10) and a safety latch (30) which is engaged by the locking lug (26) in the blocking position, if acceleration forces act on the blocking latch (10), whereby the blocking latch (10) is retained in its blocking position, and
(d) a safety pin (32), which, in the blocked state of the blocking latch (10) can be pushed through a housing (34) of the locking assembly and which is engaged by the blocking latch (10),
**characterized in that**
(e) a contact surface (38) is provided on the blocking latch (10) and extends into the path of the safety pin (32), if the blocking latch (10) is not in its correct blocking position.

2. A locking assembly as claimed in claim 1, **characterized in that**
(a) the blocking latch (10) is arranged in a housing (34), which has a bottom provided with an aperture (48), and is supported with an edge portion (50) on the bottom adjacent to the aperture,
(b) the blocking lugs (16,18) extend through the aperture (48) of the bottom, and
(c) the blocking latch (10) has an elongated hole (12) therethrough, through which a transverse bolt (14) mounted in the housing (34) extends.

3. A locking assembly as claimed in claim 1 or 2, **characterized in that** the contact surface (38) is formed by a separate component, which is connected to the blocking latch by material connecting means.

4. A locking assembly as claimed in claim 3, **characterized in that** the material connecting means is a welding connection.

5. A locking assembly as claimed in claim 3, **characterized in that** the material connecting means is a soldering connection.

6. A locking assembly as claimed in claim 3, **characterized in that** the material connecting means is a cementing connection.

7. A locking assembly as claimed in anyone of the claims 1 to 6, **characterized in that**
(a) the blocking latch (10) is arranged to be rotated from a locking position into a loading position by a positioning lever (40) non-positively engaging a cam surface (58) of the blocking latch (10), the end (56) of the positioning lever (40) engaging the cam surface (58) moving along the cam surface (58) during the rotary movement, and
(b) the cam surface (58) of the blocking latch (10) forms a travel limit by which the movement of the positioning lever (40) along the cam surface (58) and, thereby, the rotary movement of the blocking latch (10) is limited.

8. A locking assembly as claimed in claim 7, **characterized in that** the contact surface is a lug (54) provided at the blocking latch, which contact surface
- defines a surface (36) on a first side thereof which is engaged by the safety pin (32),
- defines the cam surface (58) on its second side opposite the first side,
- the cam surface (58) ending in a projecting end (62) defining the travel limit.

9. A locking assembly as claimed in claims 2 and 8, **characterized in that**, in the loading position, the transverse pin (14) is spaced from the bottom side end of the elongated hole (12).

10. A locking assembly as claimed in anyone of the claims 3 to 6, **characterized in that** the contact surface (38) is a u-profile part attached to the blocking latch (10).

## Revendications

1. Ensemble de verrouillage destiné à verrouiller un patin prévu à un missile pour un lanceur, comprenant
(a) un cliquet de blocage (10) logé de façon à pivoter et pourvu de deux taquets de blocage (16,18) qui sont chargés, en position de blocage, de saisir tout le patin prévu au missile,
(b) un ressort (24) qui exerce une charge préalable sur le cliquet de blocage (10) dans le sens de la position de blocage,
(c) un taquet de verrouillage (26) disposé au cliquet de blocage (10) et un cliquet de sûreté (30) dans lequel rentre le taquet de verrouillage (26) en position de blocage quand des forces d'accélération agissent sur le taquet de blocage (10) de telle façon que le taquet de blocage (10) est maintenu en position de blocage, et
(d) une broche de sûreté (32) qui est susceptible d'être embrochée à travers un boitier (34) de l'ensemble de verrouillage quand le cliquet de blocage est bloqué et à laquelle le cliquet de blocage (10) vient prendre appui,
**caractérisé par le fait que**
(e) une coulisse (38) est prévue au cliquet de blocage (10), coulisse qui pénètre dans la trajectoire de la broche de sûreté (32) quand le cliquet de blocage (10) n'est pas dans sa position correcte de blocage.

2. Ensemble de verrouillage selon la revendication 1, **caractérisé par le fait que**
(a) le cliquet de blocage (10) est disposé dans un boîtier (34) qui présente un fond pourvu d'un percement (48) et qui est appuyé sur le fond à côté du percement avec un élément du bord (50),
(b) les taquets de blocage (16,18) émergent à travers le percement (48) du fond,
(c) le cliquet de blocage (10) présente un trou ovale (12) traversant ce dernier transversalement par lequel s'étire un boulon (14) reposant transversalement dans le boîtier (34).

3. Ensemble de verrouillage selon la revendication 1 ou 2, **caractérisé par le fait que** la coulisse (38) est formé par un élément séparé relié au cliquet de blocage (10) par des moyens de raccordement de matériaux.

4. Ensemble de verrouillage selon la revendication 3, **caractérisé par le fait que** les moyens de raccordement de matériaux sont formés par une soudure.

5. Ensemble de verrouillage selon la revendication 3, **caractérisé par le fait que** les moyens de raccordement de matériaux sont formés par une brasure.

6. Ensemble de verrouillage selon la revendication 3, **caractérisé par le fait que** les moyens de raccordement de matériaux sont formés par un collage.

7. Ensemble de verrouillage selon l'une des revendications 1 à 6, **caractérisé par le fait que**
(a) le cliquet de blocage (10) est susceptible d'être pivoté par un levier de commande (40), adjacent à une surface bossue (58) du cliquet de blocage avec une force concentrée en un point, d'une position verrouillée dans une position chargée, l'extrémité (56) du levier de commande (40) adjacente à la surface bossue (58) se déplaçant le long de la surface bossue lors d'un déplacement pivotant et
(b) la surface bossue (58) du cliquet de blocage (10) forme une limitation de trajectoire par laquelle le déplacement du levier de commande (40) le long de la surface bossue (58) et avec cela le pivotement du cliquet de blocage (10) sont limités.

8. Ensemble de verrouillage selon la revendication 7, **caractérisé par le fait que** la coulisse est formée par un taquet (54) prévu au cliquet de blocage qui
- forme sur un premier côté une surface (36) à laquelle la broche de sûreté (32) est adjacente et
- forme sur un second côté opposé au premier côté la surface bossue (58),
- la surface bossue (58) débouchant dans une extrémité (62) en saillie formant la limitation de trajectoire.

9. Ensemble de verrouillage selon les revendications 2 et 8, **caractérisé par le fait que** le boulon transversal (14) est disposé en position chargée à un écart de l'extrémité du trou ovale (12) située du côté du fond.

10. Ensemble de verrouillage selon l'une des revendications 3 à 6, **caractérisé par le fait que** la coulisse (38) est formée par un élément profilé en U placé au cliquet de blocage (10).
